# EUROPEAN PATENT SPECIFICATION

(11) **EP 2 087 070 B1**
(45) Date of publication and mention of the grant of the patent: **05.03.2014**
(21) Application number: 07863661.0
(22) Date of filing: 30.10.2007
(51) Int. Cl.: C10G 11/00, B01D 53/86, B01J 20/04, B01J 20/08, B01J 21/00, B01J 23/10, B01J 23/63

(54) **SULFUR OXIDE REMOVING ADDITIVES AND METHODS FOR PARTIAL OXIDATION CONDITIONS**
ZUSÄTZE ZUR ENTFERNUNG VON SCHWEFELOXID UND VERFAHREN FÜR PARTIELLE OXIDATIONSBEDINGUNGEN
ADDITIFS D'ÉLIMINATION D'OXYDE DE SOUFRE ET PROCÉDÉS DANS DES CONDITIONS D'OXYDATION PARTIELLE

(30) Priority: 31.10.2006 US 855490 P
(43) Date of publication of application: 12.08.2009
(73) Proprietor: Intercat, Inc., Manasquan, NJ 08736 (US)
(72) Inventor: VIERHEILIG, Albert A., Savannah, GA 31405 (US)
(74) Representative: Ridland, John
(86) International application number: PCT/US2007/083010
(87) International publication number: WO 2008/055160

(56) References cited:
- EP-A1- 0 278 535
- WO-A1-99/11372
- US-A- 4 381 991
- US-A1- 2003 203 806
- US-A1- 2005 207 956
- US-A1- 2006 040 823
- US-B1- 6 716 525
- US-B2- 6 929 736

## Description

### CROSS-REFERENCE TO RELATED APPLICATIONS

This application claims priority to provisional application 60/855,490 filed 10/31/2006 titled SULFUR OXIDE REMOVING ADDITIVE FOR PARTIAL OXIDATION CONDITIONS.

### BACKGROUND OF THE INVENTION

### Field of the Invention

This invention includes embodiments that relate to methods and compositions for removing sulfur oxide generated by hydrocarbon catalytic cracking units, coal and/or oil-fired power plants and chemical manufacturing facilities. Particularly, the invention includes embodiments that relate to methods and compositions for reducing or removing sulfur oxide emissions from a fluid catalytic cracking unit under low oxygen or poor air circulation environments.

In petroleum refining, the fluid catalytic cracking (FCC) process is a major source of SOₓ gas emissions. During the FCC hydrocarbon cracking process, if sulfur is contained in the petroleum feedstock, a coke-like material containing a sulfur component is deposited on the SOₓ additive particles as well as on the FCC catalyst particles. Both kinds of particles, and consequently, the coke and sulfur deposited on them, are carried from a FCC unit's reactor to its catalyst regenerator. At the regenerator, the coke, and whatever sulfur is contained in the coke, is "burned off'. The sulfur component of such coke/sulfur deposits forms sulfur oxide gases (e.g., sulfur dioxide and sulfur trioxide which are often collectively referred to as "SOₓ" gases). Unless captured or removed, these SOₓ gases given off by the regenerator would be emitted to the atmosphere along with other flue gases (e.g., carbon monoxide, carbon dioxide, nitrous oxides, etc.).

Sulfur oxide gases (SOₓ) are particularly harmful to the atmosphere and, hence are the subject of extensive governmental regulation. For example, during the past 10 years in the U.S., the Environmental Protection Agency (EPA) has mandated reductions or removal of SO₂ emissions from an FCC unit from 200-1000+ppm down to as low as 25ppm SO₂. Such levels of SOₓ emissions are unprecedented for the industry and as such, requires significant usage of conventional SOₓ removing additive or installation of capital-intensive flue gas scrubbing technology.

Regarding flue gas scrubbing technology, it is a mature technology capable of reducing or removing FCC SO₂ emissions down to below the mandated 25ppm and has successfully been used for both full and partial combustion FCC units. In partial combustion FCC units, flue gas scrubbing technology is used with even greater frequency due to the poor efficiency and related economics of using a SOₓ removing additive. In fact, it is often cost-prohibitive to use SOₓ additives in units that operate under partial burn conditions, especially when the targeted SO₂ emissions are <25ppm. Furthermore, the EPA has reinforced this point by generally mandating refineries to install flue gas scrubbers when such low SOₓ levels are required.

Although flue gas scrubbing may successfully remove SO₂ emissions from partial combustion FCC units down to below government mandated levels, flue gas scrubbing process has both an initial high capital investment and high operations cost compared to SOₓ removing additive.

Furthermore, the references teach a universal "one size fits all" SOₓ removing additives technology approach without regard to the type of FCC unit, whether full or partial combustion. In contrast to this universal "one size fits all" additive usage, the performance of a particular additive in partial and full combustion mode can be quite different. For example, an additive used in a full combustion FCC unit may have a pickup efficiency of 20-40 kgs SOₓ/kgs SOₓ additive used while the same additive in a partial combustion FCC unit may have a pickup efficiency of only 5-10kgs SOₓ/kg SOₓ additive.

Consequently, what is needed is a SOₓ removing additive, wherein the sulfur oxide removing additive is suitable for a FCC unit at various types of low oxygen environment condition, such as partial burn or partial combustion and poor air circulation. Also needed is a method of removing the sulfur oxide content of a sulfur oxide-containing gas in a FCC unit in various low oxygen environment conditions.

US 2003/203806 discloses a method for decreasing SOₓ emissions from a fluid catalytic cracking unit which comprises adding a composition comprising a compound of formula Mg₆Al₂(OH)₁₈.4.5H₂O and one or more SO₂ → SO₃ oxidation catalysts comprised of a metal selected from the group consisting of cerium, vanadium, cobalt, copper, platinum, palladium, rhodium, iridium, molybdenum, tungsten, chromium, nickel, manganese, iron, ytterbium and uranium, to the fluid catalytic cracking unit to reduce the SOₓ emissions.

US 2005/207956 teaches a method for reducing SOₓ, NOₓ, and CO emissions from a fluid stream comprising contacting said fluid stream with a compound, wherein the compound comprises a compound comprising magnesium and aluminum, a hydrotalcite, and preferably a metallic oxidant comprising antimony, bismuth, cadmium, cerium, chromium, cobalt, copper, dysoprosium, erbium, europium, gadolinium, germanium, gold, holmium, iridium, iron, lanthanum, lead, manganese, molybdenum, neodymium, nickel, niobium, osmium, palladium, platinum, praseodymium, promethium, rhenium, rhodium, ruthenium, samarium, scandium, selenium, silicon, silver, sulfur, tantalum, tellurium, terbium, tin, titanium, tungsten, thulium, vanadium, ytterbium, yttrium, zinc, or a mixture of two or more thereof.

EP 0278535 discloses catalyst composition for converting hydrocarbons, which comprises an anionic clay composition comprising Mg and Al, which can be subsitituted with a number of different metals (including Ce) or impregnated with Ce or La.

US 4,381,991 teaches a process for removing sulfur oxides from a gas which comprises absorbing sulfur oxides from the gas with a solid absorbent which comprises magnesium oxide in association with at least one free or combined rare earth metal selected from the group consisting of lanthanum, cerium, praseodymium, samarium and dysprosium.

WO 99/11372 discloses a SOₓ additive system comprising a SO₂ → SO₃ oxidation catalyst component and a SO₃ absorbent component. The SO₂ → SO₃ oxidation catalyst component comprises a metal selected from the group consisting of cerium, vanadium, platinum, palladium, rhodium, molybdenum, tungsten, copper, chromium, nickel, iridium, manganese, cobalt, iron, ytterbium, and uranium, and a binder made from a material selected from the group of metal-containing compounds consisting of calcium aluminate, aluminum silicate, aluminum titanate, zinc titanate, aluminum zirconate, magnesium aluminate, magnesia, alumina, aluminum hydroxide, an aluminum-containing metal oxide compound, clay, zirconia, titania, silica, clay/phosphate, and bastnaesite,

### BRIEF SUMMARY OF THE INVENTION

The present invention meets these and other needs by providing a SOₓ removing additive and method of removing the sulfur oxide content of a sulfur oxide-containing gas in a FCC unit suitable at low oxygen environment conditions.

Accordingly, one aspect of the invention provides a SOₓ removing additive suitable for a FCC unit at low oxygen environment condition. The SOₓ removing additive includes one or more sorbents and one or more oxidation catalysts. The sorbent includes a source of Al and a divalent component. The divalent component is selected from a group consisting of magnesium, calcium, and combinations of two or more. The oxidation catalyst includes a source of cerium. The SOₓ removing additive is substantially free of vanadium.

Another aspect of the invention provides a method of removing the sulfur oxide content of a sulfur oxide-containing gas in a FCC unit. The method includes contacting the sulfur oxide-containing gas with a SOₓ removing additive at a low oxygen environment condition. The SOₓ removing additive includes one or more sorbents and one or more oxidation catalysts. The sorbent includes a source of Al and a divalent component. The divalent component is selected from a group consisting of magnesium, calcium, and combinations of two or more. The oxidation catalyst includes a source of cerium. The SOₓ removing additive is substantially free of vanadium.

Another aspect of the invention provides a method of removing the sulfur oxide content of a sulfur oxide-containing gas in a FCC. unit. The method includes contacting the sulfur oxide-containing gas with a SOₓ removing additive at a low oxygen environment condition. The SOₓ removing additive includes one or more sorbents and one or more oxidation catalysts. The sorbent includes the reaction product of a source of Al and a source of a divalent metal compound. The divalent component is selected from a group consisting of magnesium, calcium, and combinations of two or more. The oxidation catalyst includes a source of cerium. The SOₓ removing additive is substantially free of vanadium

### DETAILED DESCRIPTION

In the following description, it is understood that terms such as "top," "bottom," "outward," "inward," and the like are words of convenience and are not to be construed as limiting terms.

Reference will now be made in detail to exemplary embodiments of the invention, which are illustrated in the accompanying examples. Referring to the examples in general, it will be understood that the illustrations are for the purpose of describing a particular embodiment of the invention and are not intended to limit the invention thereto.

Whenever a particular embodiment of the invention is said to comprise or consist of at least one element of a group and combinations thereof, it is understood that the embodiment may comprise or consist of any of the elements of the group, either individually or in combination with any of the other elements of that group. Furthermore, when any variable occurs more than one time in any constituent or in formula, its definition on each occurrence is independent of its definition at every other occurrence. Also, combinations of substituents and/or variables are permissible only if such combinations result in stable compounds.

An embodiment of the invention includes a SOₓ removing additive suitable for low oxygen or rich CO environment condition of a FCC unit. The SOₓ removing additive includes one or more sorbents and one or more oxidation catalysts. The sorbent includes one or more sources of trivalent metal compounds, such as Al. The sorbent includes one or more sources of divalent components such as magnesium, calcium, either individually or in a combination of two or more. The oxidation catalyst includes one or more sources of cerium. The SOₓ removing additive is substantially free of vanadium. An embodiment of the invention also includes a SOₓ removing additive suitable for poor air circulation condition of a FCC unit.

Another aspect of the invention provides a method of removing the sulfur oxide content of a sulfur oxide-containing gas in a FCC unit. The method includes contacting the sulfur oxide-containing gas with one or more of the SOₓ removing additive at a low oxygen environment condition. The SOₓ removing additives described herein may remove SOₓ emission from the flue gas or regenerator of an FCC unit or both.

Another aspect of the invention includes contacting the sulfur oxide-containing gas with a SOₓ removing additive at a low oxygen environment condition. The SOₓ removing additive includes one or more sorbents and one or more oxidation catalysts. The sorbent includes the reaction product of one or more sources of Al and one or more sources of a divalent metal compound. The divalent component is selected from a group consisting of magnesium, calcium, and combinations of two or more. The oxidation catalyst includes one or sources of cerium. The SOₓ removing additive is substantially free of vanadium. It should be appreciated that the SOₓ removing additive also includes the reaction product of the one or more oxidation catalysts with each other, the reaction product of the one or more sorbents with the one or more oxidation catalysts, as well as the reaction product of the one or more sorbents with the each other.

### SORBENT

In one embodiment, the sorbent includes a spinel, a magnesium aluminum oxide crystallizing with a periclase structure, a hydrotalcite, a hydrotalcite-like material (HTL), a dehydrated or dehydroxylated HTL, either individually or in a combination of two or more. In one embodiment, the sorbent includes a magnesium aluminum oxide crystallizing with a periclase structure, a hydrotalcite, hydrotalcite-like material (HTL), a dehydrated or dehydroxylated HTL, either individually or in a combination of two or more.

In a particular embodiment, the sorbent includes a spinel, such as but not limited to MgAl₂O₄. Non-limiting examples, for illustration and not limitation, of various types of spinels are described in U.S. Patent No. 4,469,589, U.S. Patent No. 4,472,267, U.S. Patent No. 4,492,677, U.S. Patent No. 4,492,678, U.S. Patent No. 4,613,428, U.S. Patent No. 4,617,175, U.S. Patent No. 4,735,705, U.S. Patent No 4,758,418, and U.S. Patent No. 4,790,982. Particular examples of various types of spinel include, for illustration and not limitation, those described in U.S. Patent No.4,790,982, U.S. Patent No 4,758,418, U.S. Patent No. 4,492,678, and U.S. Patent No. 4,492,677.

In a particular embodiment, the sorbent comprises Al₂O₃ and MgO. Portions of the Al₂O₃ and MgO may be chemically reacted or unreacted. The ratio of Mg/Al in the SOₓ removing additive may readily vary. In one embodiment, the sorbent comprises substantially aluminum and magnesium components. In one embodiment the concentration of magnesium to aluminum ranges from about 0.25 to about 4 based on the total SOₓ removing additive on a molar basis. In a particular embodiment, the concentration of magnesium to aluminum ranges from about 0.5 to about 2, based on the total SOₓ removing additive on a molar basis. In yet another particular embodiment, the concentration of magnesium to aluminum ranges from about 0.75 to about 1.5, based on the total SOₓ removing additive on a molar basis.

The sorbent may comprise magnesium aluminum oxide. The magnesium aluminum oxide may crystallize with a spinel structure group. When the spinel includes a divalent metal (e.g., magnesium) and a trivalent metal (e.g., aluminum), the atomic ratio of divalent to trivalent metals in the spinel may range from about 0.17 to about 1, from about 0.25 to about 0.75, from about 0.35 to about 0.65 and from about 0.45 to about 0.55. In one embodiment, extra Mg content is present in the spinel structure such the Mg/Al ratio is higher.

In one embodiment, the sorbent comprises calcium aluminum oxide and magnesium aluminum oxide. In a particular embodiment, the sorbent comprises substantially calcium and aluminum components, In one embodiment, the concentration of calcium to aluminum ranges from about 0.25 to about 4, based on the total SOₓ removing additive on a molar basis.. In a particular embodiment, the concentration of calcium to aluminum ranges from about 0.5 to about 2, based on the total SOₓ removing additive on a molar basis. In yet another particular embodiment, the concentration of calcium to aluminum ranges from about 0.75 to about 1.5, based on the total SOₓ removing additive on a molar basis.

In one embodiment, the sorbent portion also includes one or more divalent components, either based on magnesium and/or calcium, with a concentration of 100-Al₂O₃, on a weight percentage basis, described above. The sorbent may crystallize in a periclase, spinel or other crystal structure group.

In another embodiment, the sorbent includes a hydrotalcite or hydrotalcite-like material (HTL). In a particular embodiment, the hydrotalcite or HTL may be collapsed, dehydrated and or dehydoxylated. Non-limiting examples and methods for making various types of HTL are described in U.S. Patent No. 6,028,023, U.S. Patent No. 6,479,421, U.S. Patent No. 6,929,736, and U.S. Patent No. 7,112,313. Other non-limiting examples and methods for making various types of HTL are described in U.S. Patent No. 4,866,019, U.S. Patent No. 4,964,581, and U.S. Patent No. 4,952,382 which are incorporated by reference herein in their entirety. Other methods for making hydrotalcite like compounds are described, for example, by Cavani et al, Catalysis Today, 11:173-301 (1991).

In another embodiment of the SOₓ removing additive, the sorbent comprises at least one hydrotalcite like compound of formula (I) or formula (II):

(X²⁺ₘY³⁺ₙ(OH)₂₊ₘ₂ₙ)A_{na/a}^{a-}•bH₂O (I)

(Mg²⁺ₘAl³⁺ₙ(OH)₂ₘ₊₂ₙ)A_{n/a}^{a-}•bH₂O (II)

where X is magnesium, calcium, zinc, manganese, cobalt, nickel, strontium, barium, copper or a mixture of two or more thereof; Y is aluminum, manganese, cobalt, nickel, chromium, gallium, boron, lanthanum, cerium or a mixture of two or more thereof; A is CO₃, NO₃, SO₄, Cl, OH, Cr, I, SiO₃, HPO₃, MnO₄, HGaO₃, HVO₄, ClO₄ BO₃ or a mixture of two or more thereof; a is 1, 2 or 3; b is between 0 and 10; and m and n are selected so that the ratio of m/n is about 1 to about 10. The hydrotalcite like compound of formula (II) can be hydrotalcite (i.e., Mg₆Al₂(OH))₆CO₃•4H₂O). In one embodiment, the hydrotalcite like compound of formula (I) or formula (II) can be used *per se* as the SOx removing additive.

In another embodiment of the SOₓ removing additive, the sorbent comprises a hydrotalcite like compound of formula (III) or formula (IV):

X²⁺ₘY³⁺ₙ(OH)₂₊₊₂ₙ)OHₙ⁻•bH₂O (III)

(Mg²⁺ₘAl³⁺ₙ(OH)₂ₘ₊₂ₙ)OHₙ⁻•bH₂O (IV)

wherein X is magnesium, calcium, zinc, manganese, cobalt, nickel, strontium, barium, copper or a mixture of two or more thereof; Y is aluminum, manganese, cobalt, nickel, chromium, gallium, boron, lanthanum, cerium or a mixture of two or more thereof; b is between 0 and 10; and m and n are selected so that the ratio of m/n is about 1 to about 10. In one embodiment, the compound of formula (IV) is Mg₆Al₂(OH)₁₈•4.5H₂O. The hydrotalcite like compounds of formula (III) or formula (IV) can contain minor amounts of anionic (e.g., CO₃) impurities. In one embodiment, the hydrotalcite like compound of formula (III) or formula (IV) can be used *per se* as the SOx removing additive.

When more than one sorbent is present, the plurality of sorbents may have various characteristics. For example, the sorbents may include spinel, a magnesium aluminum oxide crystallizing with a periclase structure, a hydrotalcite, hydrotalcite-like material (HTL), dehydrated or dehydroxylated HTL, either individually or in a combination of two or more. In one embodiment, the sorbents may be chemically or physically separate and distinct from each other. In another embodiment, the sorbents may be chemically or physically reacted.

The sorbent may further comprise a support material. The support material may be adjusted based on the FCC environment such as high or low oxygen environment, mixed mode or poor air distribution. Examples of support material include, but are not limited to, calcium aluminate, aluminum nitrohydrate, aluminum chlorohydrate, magnesia, silica, silicon-containing compounds (other than silica), alumina, titania, zirconia, clay, and a clay phosphate material, either individually or in a combination of two or more. In one embodiment, the sorbent may be chemically or physically separate and distinct from the support material. In another embodiment, the sorbent may be chemically or physically reacted with the support material.

The sorbent may further comprise a hardening agent. Examples of hardening agents include, but are not limited to, aluminum silicate, magnesium aluminate, magnesium silicate, calcium silicate, spinel, and sepiolite, either individually or in a combination of two or more.

### OXIDATION CATALYST

In one embodiment, the oxidation catalyst is substantially free of the presence of vanadium. In one embodiment, the oxidation catalyst is substantially free of vanadium or other reductant metal. In an embodiment, reductant metal includes vanadium or iron compounds. In another embodiment, the SOₓ removing additive is substantially free of vanadium. In another embodiment, the SOₓ removing additive is substantially free of vanadium or other reductant metal. It should be noted that some raw materials used in the preparation of the sorbent may contain some level of such metals, particularly iron. In another embodiment, the oxidation catalyst is substantially of free of iron, nickel, cobalt, manganese, tin, and vanadium, either individually or in a combination of two or more thereof. In another embodiment, the oxidation catalyst is substantially of free of nickel, titanium, chromium, magnanese, cobalt, germanium, tin, bismuth, molybdenum, antimony, and vanadium, either individually or in a combination of two or more thereof. In another embodiment, the SOₓ removing additive is substantially of free of iron, nickel, cobalt, manganese, tin, and vanadium, either individually or in a combination of two or more thereof. In another embodiment, the SOₓ removing additive is substantially of free of nickel, titanium, chromium, magnanese, cobalt, germanium, tin, bismuth, molybdenum, antimony, and vanadium, either individually or in a combination of two or more thereof.

In one embodiment, the oxidation catalyst is substantially free of the presence of vanadium to an amount of less than about 1% by weight of the total SOₓ removing sorbent. In another embodiment, the oxidation catalyst is substantially free of the presence of iron. In a particular embodiment, the oxidation catalyst is substantially free of the presence of iron in an amount less than about 1% by weight of the SOₓ removing additive.

"Substantially free" expressly allows the presence of trace amounts of the respective referred substance either individually or in a combination of two or more, such as vanadium or iron, and is not to be limited to a specified precise value, and may include values that differ from the specified value. In one embodiment, "substantially free" expressly allows the presence of trace amounts vanadium. In a particular embodiment, "substantially free" expressly allows the presence of trace amounts of a respective referred substance, such as iron, nickel, cobalt, manganese, tin, and vanadium, by less than about 10%, by less than about 5%, by less than about 1%, by less than about 0.5%, and less than about 0.1%, either individually or in a combination. "Substantially free" expressly allows the presence of the respective trace amounts of vanadium, iron, etc. but does not require the presence of the referred substance, such as vanadium or iron.

Approximating language, as used herein throughout the specification and claims, may be applied to modify any quantitative or qualitative representation that could permissibly vary without resulting in a change in the basic function to which it is related. Accordingly, a value modified by a term such as "less than about" or "substantially free of" is not to be limited to a specified precise value, and may include values that differ from the specified value. In at least some instances, the approximating language may correspond to the precision of an instrument for measuring the value. Furthermore, "removing or reducing SOₓ" may be used in combination with a term, and include a varying amount of SOₓ removal and is not to be limited to a specified precise value, and may include values that differ from a specified value.

The oxidation catalyst component may comprise a plurality of oxidation catalysts, such as components of Group IB metals, Group IIB metals, Group IVB metals, Group VIA metals, Group VIB metals, the rare earth metals, tin, and antimony, either individually or in a combination of two or more. Non-limiting examples of oxidation catalysts include cerium, platinum, palladium, rhodium, indium, molybdenum, tungsten, copper, chromium, nickel, manganese, cobalt, ytterbium, and uranium, either individually or in combination of two or more. In one embodiment, the oxidation catalyst comprises ceria. In a particular embodiment, cerium is in a range from about 1 weight % to about 30 weight % of the total SOₓ removing additive based on a CeO₂ loss free basis. In another embodiment, cerium is in a range from about 4 weight % to about 20 weight % of the total SOₓ removing additive based on a CeO₂ loss free basis. In another embodiment, cerium is in a range from about 10 weight % to about 15 weight % of the total SOₓ removing additive based on a CeO₂ loss free basis. In a particular embodiment, the concentration of cerium is about 12% of the total SOₓ removing additive based on a CeO₂ loss free basis.

In another embodiment, the oxidation catalyst further comprises one or more oxidants from the platinum group VIII such as platinum, palladium, iridium, osmium, rhodium, and ruthenium, either individually or in a combination of two or more. In another embodiment, the oxidation catalyst further comprises one or more oxidants from the platinum group VIII such as platinum, palladium, iridium, osmium, rhodium, and ruthenium, either individually or in a combination of two or more. In one embodiment, the platinum group VIII metal component comprise from about 0.1 parts-per-million (ppm) to about 10%, by weight of the total SOₓ removing additive. In a particular embodiment, the platinum group VIII metal component comprise from about 1 ppm to about 500 ppm, by weight of the total SOₓ removing additive. In another particular embodiment, the platinum group VIII metal component comprises from about 1 ppm to about 500 ppm, by weight of the total SOₓ removing additive. In one embodiment, the platinum group VIII metal component comprises platinum. In another embodiment, the platinum group VIII metal component comprises palladium. In another embodiment, the oxidation catalyst comprises platinum and ceria. When more than one oxidation catalyst is present, the plurality of oxidation catalysts may have various characteristics.

In one embodiment, at least one sorbent and at least one oxidation catalyst are distinct separate particle species as described in U.S. Patent 6,281,164. In one embodiment, distinct separate particle species for respectively a sorbent and for an oxidation catalyst includes at least a first particle for the sorbent and at least a second particle for the oxidation catalyst. A need for relatively more SOₓ sorbent may occur when a SOₓ additive is provided to a FCC unit that is being used in a partial burn mode of operation.

In another embodiment, a sorbent and an oxidation catalyst are not distinct separate particle species, but are on the same particle. Also, a plurality of sorbents may be provided with a plurality of oxidation catalysts. Each of the sorbents and oxidation catalysts may be provided in a different mode and form, and either as separate distinct species or chemically and or physically combined.

The method is not limited by a sequence of when and how the oxidation catalyst and sorbent are provided. The oxidation catalyst and sorbent can be either sequentially or simultaneously added to a FCC unit. The oxidation catalyst and sorbent may be provided to the FCC unit via the regenerator or reactor of the FCC unit. The sorbent may be provided before, during, or after the oxidation catalyst is provided. When the SOₓ removing additive comprises a plurality of oxidation catalysts, an oxidation catalysts can be provided before, during, or after another oxidation catalyst is provided. When the SOₓ removing additive comprises a plurality of sorbents, a sorbent may be provided before, during, or after another sorbent is provided.

The method is also not limited by the form of how the oxidation catalyst, sorbents, or SOₓ removing additive as a whole are provided. Examples of form include, but are not limited to, particles, grains, pellets, powders, extrudate, spheres, granules, either individually or in a combination of two or more. In one embodiment, the oxidation catalyst is in the form of microspheroidal particles. In another embodiment, the sorbent is in the form of microspheroidal particles. In one embodiment, the microspheroidal particles have an average diameter from about 20 to about 80 microns. In another embodiment, the microspheroidal particles have an average diameter greater than about 20 microns. In one embodiment, the oxidation catalyst is in the form of pellets. In another embodiment, the sorbent is in the form of pellets. When more than one sorbent is present, the plurality of sorbents may independently have various characteristics. For example, the sorbents may be in the form of microspheroidal particles, pellets, etc., either individually or in a combination of two or more. When more than one oxidation catalyst is present, the plurality of the oxidation catalysts may independently have various characteristics. For example, the oxidation catalyst may be in the form of microspheroidal particles, pellets, etc., either individually or in a combination of two or more.

In one embodiment, the SOₓ removing additive is circulated in a FCC unit with another catalyst without substantial negative interference. In one embodiment, without substantial negative interference includes retaining 90% of the function of the other catalyst. In a particular embodiment, the oxidation catalyst and sorbent are circulated in a FCC unit in admixture with another catalyst whose primary function is to catalytically crack a hydrocarbon feedstock. In one embodiment, the SOₓ removing additive further simultaneously reduces NOₓ and or gasoline sulfur emissions.

### LOW OXYGEN ENVIRONMENT

Embodiments of the methods include contacting the sulfur oxide-containing gas with a SOₓ removing additive at various low oxygen environment conditions. Examples of low oxygen environment condition include, but are not limited to, partial burn partial combustion, mixed mode FCC, full combustion FCC with poor air circulation, etc. A non-limiting embodiment of approximate conditions of a low oxygen environment include CO level of the flue of the regenerator section consistently >0.5%, more particularly >1%. Another non-limiting embodiment of approximate conditions of a low oxygen environment include excess O₂ level from the exit of the regenerator section of the FCC unit to be <0.5%, more particularly about <0.2%. In another embodiment of approximate conditions of a low oxygen environment such as a full combustion FCC with poor air distribution, the exit of the regenerator section of the FCC unit has occasional excursions of CO that are >0.5% and the excess O₂ level from the exit of the regenerator section is typically >0.5%.

The SOₓ removing additive includes one or more sorbents and one or more oxidation catalysts as described herein. The SOₓ removing additives described herein may remove SOx emission from the flue gas or regenerator of an FCC unit or both. In one embodiment, the partial burn mode may alleviate one or more the disadvantages associated with a full combustion such as heat deactivation of catalysts, fuel inefficiency, and increased feed capacity cost.

### Partial combustion FCC

An embodiment of the low oxygen environment condition includes a partial combustion FCC. A non-limiting example of a partial combustion FCC unit is characterized by possessing certain combinations of carbon monoxide, and excess oxygen in the flue gas. In one embodiment, a substantial amount of coke carbon is left on the catalyst particles when removed from the FCC regeneration zone and recycled to the FCC conversion zone. For example, the regeneration gas may contain free or molecular oxygen in an amount somewhat less than that required for complete combustion of coke (carbon and hydrogen) to carbon dioxide and steam. For illustration and not limitation, the oxygen-containing gas may be provided into the regeneration zone of the FCC system to react with less than substantially all the carbon in the coke on the catalyst particles in the regeneration zone, thereby burning off limited coke from the catalyst particles in the regeneration zone to leave an average remaining carbon content of greater than, such as but not limited to, 0.2 weight percent. Furthermore, the amount of oxygen may be limited so that there is only enough oxygen to convert sulfur dioxide to sulfur trioxide without there also being enough to convert carbon monoxide to carbon dioxide.

A non-limiting embodiment of approximate conditions of a partial combustion FCC are shown in table 1 below:

**TABLE 1**

| Parameter | Value in flue gas |
|---|---|
| Excess Oxygen | Less than about 0.5% or less than about 0.2% |
| CO, v% | Greater than about 1 % or greater than about 0.5% |

In contrast to a partial combustion FCC unit, a non-limiting example of a full combustion FCC unit is characterized by possessing a reasonably high excess concentration of oxygen in the flue gas. A full combustion FCC unit generally operates at higher temperatures than a similar FCC unit operating in partial combustion mode. In full combustion mode, the higher the excess O₂ levels of the unit, the lower will be the CO levels, since ample oxygen is present to convert this remnant CO to CO₂, or similarly, promote the conversion of the carbon directly to CO₂, without the formation of CO. Non-limiting example of approximate conditions of a full combustion FCC are shown in table 2 below:

**TABLE 2**

| Parameter | Value in flue gas |
|---|---|
| Excess Oxygen | Greater than about 0.5% |
| CO, v% | Less than about 1% |

### Mixed Mode FCC

Mixed Mode FCC is designed to incorporate the elements of both a partial combustion and full combustion FCC. In a first section, a partial combustion section of the regenerator, conditions are kept such that the carbon residue on the catalyst is oxidized predominantly to CO, leaving essentially no excess 02. In this section, a large concentration of is also generated. In the second section, a full combustion section, the catalyst is further contacted with a relatively higher concentration of air in order to remove additional residual carbon from the catalyst surface. This two-mode process subjects the catalyst to less high temperature deactivation than a conventional full combustion FCC. Thus, an embodiment of the invention includes removing or reducing sulfur oxides with the described SOx removing additive in a mixed mode FCC, with particular advantage in the partial combustion stage of the regenerator. An embodiment of a mixed mode FCC includes Stone & Webster R2R model which contains a dual stage regenerator.

### Full Combustion FCC with Poor Air Distribution

It has been observed that some units, although operating in full combustion mode, contain one or more conditions found in partial combustion units, most notably essentially no excess O₂ and very high CO levels. This type of condition may be observed by monitoring the flue gas of the unit for CO level. If the unit routinely shows excursions of CO above 1%, then this type of unit may have poor air distribution and would benefit from the embodiments described herein and is within the scope of the invention.

Air is continually introduced into the bottom of the regenerator, although one skilled in the art will appreciate that air can be introduced at any location in the regenerator. Air contains about 21 % oxygen (i.e., O₂), about 78% nitrogen (i.e., N₂), and about 1% of other components. In poor air distribution FCC units, the air may be unevenly distributed in the regenerator. Uneven distribution means that there are areas in the regenerator that have high oxygen concentrations (e.g., above 2% oxygen; above 3% oxygen; above 4% oxygen; or above 5% oxygen, i.e., an oxidizing environment) and areas that have low oxygen concentrations (e.g., less than 2% oxygen, i.e., a reducing environment). Thus, within the scope of and in one embodiment of the invention, the SOx removing additive described herein may remove or remove SOₓ emissions from an FCC unit that has regenerator with uneven oxygen distribution. The SOₓ removing additives may remove SOₓ emission from the flue gas or regenerator of an FCC unit or both.

It should be understood that is within and included in the scope of the invention to adjust various FCC unit parameter settings. Examples of such parameters include temperature, pressure, and the residence time of the cracking catalyst in the regeneration zone. It should also be understood that the invention is not limited by the type of FCC feed, type of FCC catalyst, or FCC unit.

The SOₓ removing additive of the invention can be added to any conventional reactor-regenerator systems, to ebullating catalyst bed systems, to systems which involve continuously conveying or circulating catalysts/additives between reaction zone and regeneration zone and the like. Circulating bed systems are preferred. Typical of the circulating bed systems are the conventional moving bed and fluidized bed reactor-regenerator systems. Both of these circulating bed systems have been used in hydrocarbon conversion (e.g., hydrocarbon cracking) operations but current catalytic cracking is nearly exclusively of the fluid catalytic cracking type. The SOₓ additive comprising one or more sorbents and one or more oxidation catalyst described herein above may also reduce sulfur from gasoline. The additives herein are introduced into the regenerator and/or reactor of the FCC unit and are continuously cycled between the FCC reactor and the regenerator. The additive can be used in an amount of at least 1%; at least 2%; or at least 5%; in an amount of at least about 10% of the inventory of the regenerator; or in an amount of at least about 20% of the inventory of the regenerator to reduce sulfur from gasoline.

### EXAMPLES

The following examples illustrate the features of embodiments of the invention and are not intended to limit the invention thereto.

Various compositions were prepared and tested for their ability to reduce SO₂ emission levels in the gas stream. A listing of the various samples along with their compositions is shown in the following Table 3:

**Table 3**

| Example No | Description | Approximate Composition | | Particles |
|---|---|---|---|---|
| | | Mg/Al Ratio of overall composition | Oxidants | |
| Comparative Example 1 | Cerium oxide, CeO₂ on alumina, Al₂O₃ | n/a | 12% CeO₂ | Sorbent and Oxidant in Same Particle |
| Comparative Example 2 | Commercially Available Combustion Promoter, Platinum, Pt on alumina, Al₂O₃, INTERCAT COP-850™ | n/a | 850ppm Pt | Sorbent and Oxidant in Same Particle |
| Comparative Example 3 | Commercially available Mg-Al spinel-based product, Davison Catalyst Super DESOX™ | 1:1 | 12% CeO₂, 2.5% V₂O₅ | Sorbent and Oxidants in Same Particle |
| Comparative Example 4 | Commercially available Mg-Al Hydrotalcite-based product, INTERCAT Super SOXGETTER™ | 4:1 | 16% CeO₂, 4.5% V₂O₅ | Sorbent and Oxidant in Same Particle |
| Example 1 | Magnesium Aluminum Oxide with Spinel Crystal Structure | 1:1 | 12% CeO₂, | Sorbent and Oxidant in Same Particle |
| Example 2 | Magnesium Aluminum Oxide with Spinel Crystal Structure | 1:1 | 12% CeO₂, 42ppm Pt | Sorbent and Oxidant in Same Particle |
| Example 3 | Magnesium Aluminum Oxide with Spinel Crystal Structure | 1:1 | 12% CeO₂, 42ppm Pd | Sorbent and Oxidant in Same Particle |
| Example 4 | 95% Example 1 / 5% Comparative Example 2 | 1:1 | CeO₂, / Pt | Physical blend of two different particles |

Each composition was prepared using techniques well known in the catalyst art. Generally, all samples were prepared using pseudoboehmite alumina as the alumina source and magnesium oxide or magnesium hydroxide as the magnesium source. The Cerium source was generally cerium nitrate. Calcium was used in either an oxide or nitrate form. All compositions above are based upon the oxide equivalent, weight percent dry basis (1000°C) of the total SOₓ removing additive. In each case, the compositions are prepared such as to utilize raw materials and heat treatment conditions which give rise to maximum surface area of the particular composition, while also taking into consideration other required properties for fluid bed applications such as apparent bulk density, attrition resistance and particle size distribution of the resulting microspheres. All products were tested following spray drying of the slurry mixture in order to create the microspheroidal particles followed by heat treatment in air at about 600-750°C for one hour.

An amount of about 2 grams of inert silica-alumina microspheres were blended with 2 grams of each additive formulation and loaded into a fixed fluidized bed quartz reactor and heated to 650°C. The inert microspheres were used to provide for proper fluidization of the powder within the reactor. An inlet gas composition initially containing only nitrogen was permitted to flow through the reactor in order to determine a base set of conditions. The outlet port of the reactor was allowed to pass through a set of gas detectors in order to determine the amount of a particular gas species exiting the reactor. For the present case, both oxygen and sulfur dioxide were measured on a continuous basis.

After an equilibration period in which the additive/inert combination were heated in the reactor under nitrogen gas, the gas was switched to a blended composition of 0.1 % O₂ and 1450ppm SO₂, with the balance being nitrogen. The SO₂ and O₂ levels were monitored for up to 24 hours. Compositions which exhibited the lowest SO₂ levels were for the longest period of time were considered to be best performers, relative to the comparative materials. In the following Table 4, the results of the test are summarized:

**Table 4: SOₓ Removal performance Data**

| Example No | Description | SO₂ at 1000 minutes, ppm |
|---|---|---|
| Comparative Example 1 | Cerium oxide, CeO₂ on alumina, Al₂O₃ | 1230 |
| Comparative Example 2 | Commercially Available Combustion Promoter, Platinum, Pt on alumina, Al₂O₃, INTERCAT COP-850™ | 1081 |
| Comparative Example 3 | Commercially available Mg-Al spinel-based product, Davison Catalyst Super DESOX | 159 |
| Comparative Example 4 | Commercially available Mg-Al Hydrotalcite-based product, INTERCAT Super SOXGETTER™ | 147 |
| Example 1 | Magnesium Aluminum Oxide with Spinel Crystal Structure | 64 |
| Example 2 | Magnesium Aluminum Oxide with Spinel Crystal Structure | 84 |
| Example 3 | Magnesium Aluminum Oxide with Spinel Crystal Structure | 7 |
| Example 4 | 95% Example 1 / 5% Comparative Example 2 | 70 |

All compositions of the embodiments of present invention show results that are improved when compared with the prior art comparative examples.

A commercial comparison of a sulfur oxide removing additive based upon Example 2 of an embodiment of the present application and commercially available product, INTERCAT SOXGETTER™ in a Stone & Webster R2R ™ style FCC unit is described below. A characteristic feature of the R2R style FCC is that regenerator includes two sections R1 and R2, wherein first regenerator section R1 is at very low excess oxygen level and the second regenerator section R2 operates at high excess oxygen, R2. In the R1 section, the excess oxygen is typically 0.1%, while the R2 section operates at about 3.9% excess oxygen. The SOXGETTER product sorbed the sulfur oxide in the FCC regenerator flue gas line at a rate of approximately 5.4 kgs SO2 sorbed per kg product added, while the sulfur oxide removing additive of Example 2 of an embodiment of the present application performed at an average sorption factor of 15.6 kgs SO2 sorbed per kg of product added.

## Claims

1. A method of removing the sulfur oxide content of a sulfur oxide-containing gas in a FCC unit, the method comprising:
contacting the sulfur oxide-containing gas with a SOₓ removing additive at a low oxygen environment condition, wherein the CO level of the flue of the regenerator section is greater than 0.5 V% and the O₂ level of the flue of the regenerator section is less than 0.2 V% wherein the SOₓ removing additive comprises:
a sorbent comprising a reaction product of
a source of Al and
a divalent component selected from a group consisting of magnesium, calcium, and combinations of two or more;
an oxidation catalyst comprising a source of cerium; and
wherein the SOₓ removing additive contains less than 0.1 wt% of vanadium.

2. The method of claim 1, wherein the sorbent comprises at least one member selected from a group consisting of spinel, magnesium aluminum oxide crystallizing with a periclase structure, hydrotalcite, dehydrated or dehydroxylated hydrotalcite, and combinations of two or more.

3. The method of claim 1, wherein the sorbent consists essentially of magnesium and aluminum components.

4. The method of claim 3, wherein the concentration of magnesium to aluminum ranges from 0.25 to 4.0 based on the total SOₓ removing additive on a molar basis.

5. The method of claim 4, wherein the concentration of magnesium to aluminum ranges from 0.5 to 2.0 based on the total SOₓ removing additive on a molar basis.

6. The method of claim 1, wherein the sorbent comprises greater than 30% Al₂O₃, when represented on an oxide equivalent loss free basis of the sorbent.

7. The method of claim 1, wherein the sorbent comprises calcium aluminum oxide.

8. The method of claim 1, wherein the sorbent comprises calcium aluminum oxide and magnesium aluminum oxide.

9. The method of claim 1, wherein the sorbent consists essentially of calcium and aluminum components.

10. The method of claim 1, wherein the SOₓ removing additive reduces SOₓ emission from at least one member selected from a group consisting of flue gas of an FCC unit, a regenerator of an FCC unit, and combination thereof

11. The method of claim 1, wherein the SOₓ removing additive further comprises another oxidation catalyst comprising at least a member selected from a group consisting of platinum, palladium, iridium, osmium, rhodium, and ruthenium.

## Patentansprüche

1. Verfahren zur Entfernung des Schwefeloxidgehalts eines Schwefeloxid enthaltenden Gases in einer FCC-Anlage, wobei das Verfahren Folgendes umfasst:
Inkontaktbringen des Schwefeloxid enthaltenden Gases mit einem SOx entfernenden Additiv bei einer sauerstoffarmen Umgebungsbedingung, wobei der CO-Gehalt des Abzugs des Regeneratorabschnitts größer als 0,5 Vol.-% ist und der O2-Gehalt des Abzugs des Regeneratorabschnitts niedriger als 0,2 Vol.-% ist, wobei das SOx entfernende Additiv Folgendes umfasst:
ein Sorbens umfassend ein Reaktionsprodukt von
einer Quelle von Al und
einem zweiwertigen Bestandteil, der aus einer Gruppe bestehend aus Magnesium, Calcium und Kombinationen von zweien oder mehr ausgewählt ist;
einen Oxidationskatalysator umfassend eine Quelle von Cer; und
wobei das SOx entfernende Additiv zu unter 0,1 Gew.-% Vanadium enthält.

2. Verfahren nach Anspruch 1, wobei das Sorbens mindestens ein aus einer Gruppe bestehend aus Spinell, mit einer Periklas-Struktur kristallisierendem Magnesium-Aluminium-Oxid, Hydrotalcit, dehydratisiertem oder dehydroxyliertem Hydrotalcit und Kombinationen von zweien oder mehr ausgewähltes Mitglied umfasst.

3. Verfahren nach Anspruch 1, wobei das Sorbens im Wesentlichen aus Magnesium- und Aluminium-Bestandteilen besteht.

4. Verfahren nach Anspruch 3, wobei der Anteil von Magnesium zu Aluminium von 0,25 bis 4,0 bezogen auf das gesamte SOx entfernende Additiv auf Molbasis reicht.

5. Verfahren nach Anspruch 4, wobei der Anteil von Magnesium zu Aluminium von 0,5 bis 2,0 bezogen auf das gesamte SOx entfernende Additiv auf Molbasis reicht.

6. Verfahren nach Anspruch 1, wobei das Sorbens zu über 30 % Al2O3 umfasst, wenn es auf einer Oxidäquivalent-verlustfreien Basis des Sorbens angegeben ist.

7. Verfahren nach Anspruch 1, wobei das Sorbens Calcium-Aluminium-Oxid umfasst.

8. Verfahren nach Anspruch 1, wobei das Sorbens Calcium-Aluminium-Oxid und Magnesium-Aluminium-Oxid umfasst.

9. Verfahren nach Anspruch 1, wobei das Sorbens im Wesentlichen aus Calcium- und Aluminium-Bestandteilen besteht.

10. Verfahren nach Anspruch 1, wobei das SOx entfernende Additiv die SOx-Emission von mindestens einem aus einer Gruppe bestehend aus Rauchgas einer FCC-Anlage, einem Regenerator einer FCC-Anlage und einer Kombination davon ausgewählten Mitglied verringert.

11. Verfahren nach Anspruch 1, wobei das SOx entfernende Additiv ferner einen anderen Oxidationskatalysator umfasst, der mindestens ein aus einer Gruppe bestehend aus Platin, Palladium, Iridium, Osmium, Rhodium und Ruthenium ausgewähltes Mitglied umfasst.

## Revendications

1. Procédé pour éliminer la teneur en oxyde de soufre d'un gaz contenant de l'oxyde de soufre dans une unité FCC, le procédé comprenant :
la mise en contact du gaz contenant de l'oxyde de soufre avec un additif d'élimination des SOx dans des conditions d'environnement possédant une faible teneur en oxygène, le taux de CO du carneau de la section de régénérateur étant supérieur à 0,5 % en volume et le taux de 02 du carneau de la section de régénérateur étant inférieur à 0,2 % en volume, l'additif d'élimination des SOx comprenant :
un agent sorbant comprenant le produit réactionnel
d'une source de Al ; et
d'un composant divalent choisi parmi le groupe constitué par le magnésium, le calcium et des combinaisons de deux d'entre eux ou plus ;
un catalyseur d'oxydation comprenant une source de cérium ; et
dans lequel l'additif d'élimination des SOx contient moins de 0,1 % en poids de vanadium.

2. Procédé selon la revendication 1, dans lequel l'agent sorbant comprend au moins un membre choisi parmi le groupe constitué par un spinelle, un oxyde de magnésium-aluminium qui cristallise avec une structure de périclase, de l'hydrotalcite, de l'hydrotalcite déshydraté ou déshydroxylé, ainsi que des combinaisons de deux d'entre eux ou plus.

3. Procédé selon la revendication 1, dans lequel l'agent sorbant est constitué essentiellement de composants de magnésium et d'aluminium.

4. Procédé selon la revendication 3, dans lequel la concentration du magnésium par rapport à l'aluminium se situe dans la plage de 0,25 à 4,0, basés sur la quantité totale de l'additif d'élimination des SOx sur une base molaire.

5. Procédé selon la revendication 4, dans lequel la concentration du magnésium par rapport à l'aluminium se situe dans la plage de 0,5 à 2,0, basés sur la quantité totale de l'additif d'élimination des SOx sur une base molaire.

6. Procédé selon la revendication 1, dans lequel l'agent sorbant comprend plus de 30 % de Al2O3, lorsqu'on le représente sur une base de l'agent sorbant, exempte de perte d'équivalent oxyde.

7. Procédé selon la revendication 1, dans lequel l'agent sorbant comprend de l'oxyde de calcium-aluminium.

8. Procédé selon la revendication 1, dans lequel l'agent sorbant comprend de l'oxyde de calcium-aluminium et de l'oxyde de magnésium-aluminium.

9. Procédé selon la revendication 1, dans lequel l'agent sorbant est constitué essentiellement de composants de calcium et d'aluminium.

10. Procédé selon la revendication 1, dans lequel l'additif d'élimination des SOx réduit l'émission des SOx à partir d'au moins un membre choisi parmi le groupe constitué par du gaz de carneau d'une unité FCC, par un régénérateur d'une unité FCC et par une combinaison des deux.

11. Procédé selon la revendication 1, dans lequel l'additif d'élimination des SOx comprend en outre un autre catalyseur d'oxydation comprenant au moins un membre choisi parmi le groupe constitué par le platine, le palladium, l'iridium, l'osmium, le rhodium et le ruthénium.
